(19) Europäisches Patentamt / European Patent Office / Office européen des brevets

(11) **EP 3 943 906 A1**

(12) **EUROPEAN PATENT APPLICATION**

(43) Date of publication:
**26.01.2022 Bulletin 2022/04**

(21) Application number: **20187508.5**

(22) Date of filing: **23.07.2020**

(51) International Patent Classification (IPC):
**G01M 1/04** $^{(2006.01)}$   **G01M 1/22** $^{(2006.01)}$
**G01M 17/013** $^{(2006.01)}$

(52) Cooperative Patent Classification (CPC):
**G01M 1/225**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Robert Bosch S.p.A.**
**20149 Lombardia (MI) (IT)**

(72) Inventors:
• **Dambach, Gerhard**
**20020 Arese (MI) (IT)**

• **Pozzato, Gabriele**
**36066 Sandrigo (Vicenza) (IT)**
• **Savaresi, Sergio Matteo**
**36066 Sandrigo, Vicenza) (IT)**
• **Strada, Silvia Carla**
**57033 Marciana Marina (Livorno) (IT)**

(74) Representative: **Bee, Joachim**
**Robert Bosch GmbH**
**Zentralabteilung Patente**
**Postfach 30 02 20**
**70442 Stuttgart (DE)**

(54) **MANUAL ROTOR BALANCER, METHOD FOR MANUALLY BALANCING A ROTOR AND CONTROL UNIT**

(57)    A balancer (1) for balancing a rotor (5), particularly a vehicle wheel, comprises:
- a base (2);
- a shaft support (3) connected to the base (2);
- a shaft (4) rotatable along a rotation axis (R) relative to the shaft support (3), configured such that the rotor (5) to be balanced can be mounted on the shaft (4);
- means (11) for manually rotating the shaft (4);
- one or more elastic elements (6) positioned between the shaft support (3) and the base (2), such that the shaft support (3) is elastically suspended over the base (2);
- a first IMU (7) fixedly positioned on the shaft support (3) and configured to measure a first ($a_z$) and/or a second ($a_y$) and/or a third accelerations ($a_x$), and/or a first ($\omega_z$) and/or a second ($\omega_y$) and/or a third ($\omega_x$) angular speeds along three axes (x, y, z) of a reference frame integrally moving with the first IMU (7), and to generate signals representative of the same;
- a second IMU (8) fixedly positioned on the shaft (4) at a radial distance from the shaft rotation axis (R), and configured to measure a first ($a_z$) and/or a second ($a_y$) and/or a third accelerations ($a_x$), and/or a first ($\omega_z$) and/or a second ($\omega_y$) and/or a third ($\omega_x$) angular speeds along three axes (x, y, z) of a reference frame integrally moving with the second IMU (8), and to generate signals representative of the same.

FIG. 2

EP 3 943 906 A1

**Description**

BACKGROUND

Technical field

The present invention relates to a manual rotor balancer and to a method for manually balancing a rotor. Particularly, the rotor to be balanced can be a vehicle wheel, such as a car wheel. Furthermore, the invention relates to a control unit configured a part of the balancer or to perform a least one step of the balancing method.

Description of the Related Art

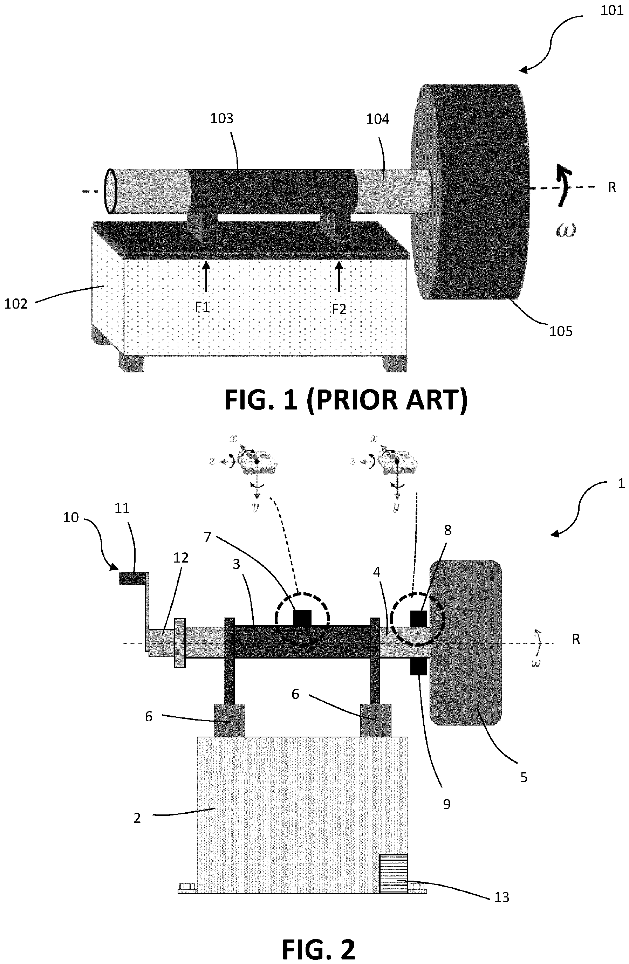

Wheel balancers are known to detect angular position and severity (i.e. the mass in grams) of unbalances in vehicle wheels. Indeed, when wheels are rotating, the presence of asymmetries in the mass distribution causes anomalous forces and torques on the axles, leading to vibrations and to ride disturbances. Wheel balancers detect these asymmetries in order to perform a balancing.
Two principal type of unbalance may arise: static unbalance and dynamic unbalance.
Static unbalance is the eccentricity of the center of gravity of a rotor, caused by a point mass at a certain radius from the wheel center of rotation. Static unbalances may arise both on the outer side and on the inner side of the wheel.
On the other side, a dynamic unbalance arises when two equal masses positioned at 180° from each other are placed symmetrically about the center of gravity and shifted along the rotor rotation axis.
With reference to vehicle wheels, both static and dynamic unbalances can be balanced by placing suitable balancing masses on the inner and/or on the outer wheel rims.
A wheel balancer 101 according to the known art is schematically shown in Fig. 1. The wheel balancer 101 comprises a base 102, a shaft support 103 rigidly positioned on the base 102, and a shaft 104 rotatable along a rotation axis R relative to the base 102, actuated by a motor, not shown in the Figures. A wheel 105 to be balanced is mounted at one end of the shaft 104. When the unbalanced wheel 105 is rotated at constant speed co, two forces F1 and F2 are detected in two different positions of the shaft support 103 along the rotation axis R, from which the wheel 105 unbalances can be determined. Therefore, known wheel balancers mainly rely on force sensors, particularly on piezoelectric sensors. The major drawback of these sensors is that they are prone to lose calibration and accuracy during the wheel balancer lifetime. Moreover, these sensors are generally expensive.
Additionally, the balancers according to the known art need a source of electric energy for working, particularly in connection with the motor actuation.

BRIEF SUMMARY OF THE INVENTION

The problem underlying the present invention is therefore to provide a balancer and a balancing method allowing the balancing of a rotor, particularly of a vehicle wheel, without the need of force sensors, even in an environment where sources of electric energy are limited.
This problem is solved by a manual balancer for balancing a rotor, particularly a vehicle wheel, comprising:

-    a base;
-    a shaft support connected to the base;
-    a shaft rotatable along a rotation axis relative to the shaft support, configured such that the rotor to be balanced can be mounted on the shaft;
-    means for manually rotating the shaft;
-    one or more elastic elements positioned between the shaft support and the base, such that the shaft support is elastically suspended over the base;
-    a first inertial measurement unit (hereinafter "IMU") fixedly positioned on the shaft support and configured to measure a first and/or a second and/or a third accelerations, and/or a first and/or a second and/or a third angular speeds along three axes of a reference frame integrally moving with the first IMU, and to generate signals representative of the same;
-    a second IMU fixedly positioned on the shaft at a radial distance from the shaft rotation axis, and configured to measure a first and/or a second and/or a third accelerations, and/or a first and/or a second and/or a third angular speeds along three axes of a reference frame integrally moving with the second IMU, and to generate signals representative of the same.

According to the invention, the detection of unbalanced masses is therefore attained relying on low-cost ac-

# EP 3 943 906 A1

celerometers and/or gyroscopes with substantially no need of electric energy, since the presence of an electric motor is not necessary.

According to an embodiment, in the balancer normal condition of use, the shaft rotation axis is horizontal.

According to an embodiment, the first IMU is oriented such that a first axis of the first IMU reference frame is parallel to the shaft rotation axis and the other two axes lie on a plane perpendicular to the shaft rotation axis.

According to an embodiment, the first IMU is oriented such that a second of said other two axes is oriented vertically and a third of said other two axes is oriented horizontally.

According to an embodiment, the first IMU is configured to detect the first, the second and the third angular speeds along said three axes of the first IMU reference frame.

According to an embodiment, the fixed IMU is configured to further detect the first and the third accelerations along said first and third axes of the first IMU reference frame.

According to an embodiment, the second IMU is oriented such that a first axis of the second IMU reference frame is parallel to the shaft rotation axis, and a second and a third axes of said second IMU reference frame lie on a plane perpendicular to the shaft rotation axis.

According to an embodiment, the second IMU is configured to detect the second and the third angular speeds along said second and third axes of the second IMU reference frame.

According to an embodiment, the one or more elastic elements are configured such that the shaft support can oscillate vertically and horizontally relative to the base.

According to an embodiment, the one or more elastic elements have two different stiffness coefficients along the vertical and the horizontal displacement directions of the shaft support relative to the base.

According to an embodiment, the one or more elastic elements comprise one or more elastomer mounts placed between the shaft support and the base.

According to an embodiment, the balancer further comprises a balancing mass having the same mass as the second IMU, said balancing mass being fixedly positioned on the shaft in a position radially opposite to the radial position of the second IMU

According to an embodiment, said means for manually rotating the shaft comprises a handle directly or indirectly connected to the shaft.

According to an embodiment, said handle is connected with the shaft through a transmission, the transmission comprising a freewheel mechanism.

According to an embodiment, the balancer further comprises a brake for braking the shaft.

According to an embodiment, the balancer further comprises a control unit configured for:

- receiving the signals coming from the first and the second IMUs;
- determining when the shaft has reached a predetermined rotational speed on the basis of at least one of the signals coming from said first and second IMUs;
- determining if the shaft is decelerating after reaching said predetermined rotational speed on the basis of at least one of the signals coming from said first and second IMUs;
- if the shaft is decelerating, determining during a predetermined time window from said signals coming from the first and the second IMUs an estimated unbalance severity and an estimated unbalance angular position in the rotor.

According to an embodiment, the control unit is configured for estimating the amplitudes and the phases of the signals coming from the fixed IMU during the predetermined time window assuming that during said predetermined time window the shaft rotational speed is equal to the average rotational speed during the predetermined time window.

According to an embodiment, the control unit is configured for estimating the amplitudes and the phases of the signals coming from the rotating IMU during the predetermined time window, after a pre-processing of the signals for eliminating the trends due to the shaft deceleration, assuming that during said predetermined time window the shaft rotational speed is equal to the average rotational speed during the predetermined time window.

According to an embodiment, the control unit is configured for determining the estimated unbalance severity on the basis of a first predetermined relation between the amplitudes of the signals estimated for the first IMU and the unbalance severity, and for determining the unbalance angular position on the basis of a second predetermined relation between the phases of the signals estimated for the second IMU, the estimated unbalance severity and the unbalance angular position.

According to an embodiment, the unbalance comprises at least one of: a static unbalance on the rotor inner side, a static unbalance on the rotor outer side, a dynamic balance, wherein said first and second predetermined relations depend on the unbalance type, wherein the control unit is configured for distinguishing the type of the unbalance among a static unbalance on the rotor inner side, a static unbalance on the rotor outer side, a dynamic balance on the basis of the signals received from the fixed and the rotating IMUs, and for providing a flag indicating the type of unbalance.

According to an embodiment, the balancer further comprises a visual and/or acoustic indicator for indicating

3

when the predetermined shaft rotational speed has been reached, the control unit being connected to the first and/or to the second IMU and to the indicator and being configured for activating the indicator when it determines that the predetermined shaft rotational speed has been reached on the basis of at least one signal coming from the first and/or from the second IMU

According to an embodiment, the balancer further comprises a visual and/or acoustic indicator for indicating when the predetermined time window is finished, the control unit being connected to the indicator and being configured for activating the indicator when it determines that the predetermined time window is finished.

According to an embodiment, the control unit is connected to the brake and is configured for activating said brake when it determines that the predetermined time window is finished.

According to another aspect of the present invention, a method for manually balancing a rotor, particularly a vehicle wheel, comprises:

- mounting said rotor on a shaft of a balancer comprising a base, a shaft support connected to the base, said shaft rotatable along a rotation axis relative to the shaft support, one or more elastic elements positioned between the shaft support and the base, such that the shaft support is elastically suspended over the base, a first IMU fixedly positioned on the shaft support and configured to measure a first and/or a second and/or a third accelerations, and/or a first and/or a second and/or a third angular speeds along three axes of a reference frame integrally moving with the first IMU, and to generate signals representative of the same, a second IMU fixedly positioned on the shaft at a radial distance from the shaft rotation axis, and configured to measure a first and/or a second and/or a third accelerations, and/or a first and/or a second and/or a third angular speeds along three axes of a reference frame integrally moving with the second IMU, and to generate signals representative of the same;
- manually rotating the shaft until it has reached a minimal predetermined rotational speed;
- releasing the shaft such that it gradually decelerates;
- during a predetermined time window when the shaft decelerates, receiving the signals coming from the first and the second IMUs;
- determining from said signals coming from the first and the second IMUs an estimated unbalance severity and an estimated unbalance angular position in the rotor.

According to an embodiment, the method further comprises: estimating the amplitudes and the phases of the signals coming from the fixed IMU during the predetermined time window assuming that during said predetermined time window the shaft rotational speed is equal to the average rotational speed during the predetermined time window.

According to an embodiment, determining the estimated unbalance severity comprises: determining the estimated unbalance severity on the basis of a first predetermined relation between said amplitudes estimated for the signals received from the first IMU and the unbalance severity.

According to an embodiment, the method further comprises:

- pre-processing the signals coming from the rotating IMU during the predetermined time window for eliminating the trends of the amplitudes due to the shaft deceleration;
- estimating the amplitudes and the phases of the pre-processed signals coming from the second IMU assuming that during said predetermined time window the shaft rotational speed is equal to the average rotational speed during the predetermined time window.

According to an embodiment, determining the unbalance angular position ($\hat{\phi}$) comprises: determining the unbalance angular position on the basis of a second predetermined relation between the phases estimated for the signals received from the second IMU (8), the estimated unbalance severity ($\hat{m}$) and the unbalance angular position.

BRIEF DESCRIPTION OF THE DRAWINGS

Further characteristics and advantages will be more apparent from the following description of preferred embodiments and of their alternatives given as a way of an example with reference to the enclosed drawings in which:

Figure 1 is schematic side view of a balancer according to the prior art;
Figure 2 is a schematic side view of a manual balancer according to an embodiment of the invention;
Figures 3-5 are diagrams showing the relation between an IMU signal amplitude and an unbalance severity in three different conditions assuming that the balancer shaft rotational speed is constant;
Figures 6-7 are diagrams showing the relation between an IMU signal phase and an unbalance angular position in two different conditions assuming that the balancer shaft rotational speed is constant.
Figure 8 is a diagram showing a possible trend of the balancer shaft rotational speed actuated by an operator as a function of time;

Figure 9 shows a possible trend of a signal coming from a rotating IMU of the balancer according to the invention, before and after a de-trend operation, as a function of the balancer shaft rotational speed;

Figure 10 is a block diagram showing the phases underlying a wheel balancing method according to an embodiment of the invention.

## DETAILED DESCRIPTION OF THE INVENTION

In the following description, same alphanumeric references are used for analogous exemplary elements when they are depicted in different drawings.

A manual balancer 1 according to the invention is schematically shown in Fig. 2. The balancer 1 according to the invention can be used for balancing rotors of substantially any type. Preferably, the balancer 1 according to the invention is intended for balancing vehicle wheels. In the present description a vehicle wheel balancer will be mainly considered as an exemplary embodiment.

The balancer 1 comprises a base 2, a shaft support 3 connected to the base 2, and a shaft 4 rotatable along a rotation axis R relative to the shaft support 3. A rotor 5, for example a vehicle wheel, to be balanced can be mounted for example at one end of the shaft 4. The shaft 4 rotation does not need any motor. On the contrary, the balancer 1 comprises means 10 for manually rotating the shaft 4, suitable to be driven by a human operator without the need of any additional source of energy.

According to a possible embodiment, the means 10 for manually rotating the shaft 4 comprises a handle 11 directly or indirectly connected to the shaft 4, preferably at or near an end of the shaft 4 opposite to the end of the shaft 4 where the rotor 5 to be balanced is positioned. The handle 11 can be directly positioned at the above-mentioned end of the shaft 4 and be put in rotation integrally with the latter. However, according to another embodiment, the handle 11 is connected with the shaft 4 through a transmission 12, preferably configured for multiplying the handle rotational speed, i.e. configured such that the shaft rotational speed is higher than the handle rotational speed. Preferably, the transmission 12 comprises a freewheel mechanism (not shown in the Figures) configured such that, once the human operator stops driving the handle 11 and the shaft 4 continues to rotate due to inertia, the handle 11 stops or substantially rotating, thereby reducing any risk of injures for the operator.

According to a possible embodiment, the balancer 1 comprises a brake 13 for braking the shaft 4 rotation when necessary. The brake 13 can be manually activated and, for example, can comprise a pedal, a lever, or the like for this purpose. Alternatively or in addition, the brake 13 can be automatically activated under specific circumstances which will be described more in detail below.

With reference to the normal condition of use of the balancer 1, the shaft 4 rotation axis R is preferably horizontal, i.e. perpendicular to the gravitational acceleration. The wheel 5 to be balanced is preferably mounted on the shaft 4 such that its rotation axis corresponds to the shaft 5 rotation axis. In presence of the transmission 12, the handle 11 rotational axis is preferably parallel to the shaft 4 rotation axis.

According to the invention, the shaft support 3 is suspended over the base 2. To this purpose, the balancer 1 comprises one or more elastic elements 6 positioned between the shaft support 3 and the base 2, such that the shaft support 3 is elastically connected to the base 2 and suspended over the latter. Advantageously, the elastic elements 6 are configured such that the shaft support 3 can oscillate vertically (i.e. along a direction parallel to the gravity acceleration) and horizontally (i.e. along directions perpendicular to the gravity acceleration). In this manner, the rotation of the unbalanced wheel 5 mounted on the shaft 4 results in horizontal and vertical vibrations of the shaft support 3 over the base 2.

Advantageously, the one or more elastic elements 6 act both elastically and as damping elements and, generally, have two different stiffness coefficients along the two displacement directions of the shaft support 3 relative to the base 2. Preferably, the stiffness coefficient along the vertical direction is higher than the stiffness coefficient along the horizontal directions.

According to an embodiment, the elastic elements 6 comprise one or more elastomer mounts placed between the shaft support 3 and the base 2. For example, the balancer 1 can comprise four elastomer mounts positioned symmetrically on two opposite sides of the shaft rotation axis R.

Preferably, the stiffness coefficients of the elastic elements 6 are selected such that, when the shaft 4 rotates at an angular speed co, the balancer 1 (with the wheel 5) is sufficiently far from a resonance condition, while maintaining at the same time sufficiently big amplitudes of vibrations of the shaft support 3 relative to the base 2.

The balancer comprises a first 7 and a second 8 inertial measuring units IMUs, each configured to measure a first ($a_x$) and/or a second ($a_y$) and/or a third accelerations ($a_z$), and/or a first ($\omega_x$) and/or a second ($\omega_y$) and/or a third ($\omega_z$) angular speeds along three axes x, y, z, of respective reference frames integrally moving with the IMUs, and to generate signals representative of the same.

The first IMU 7 (hereinafter "fixed IMU 7") is fixedly positioned on the shaft support 3. Preferably, it is oriented such that an axis z of the first IMU reference frame is parallel to the shaft rotation axis R, and the other axes x, y lie on a plane perpendicular to the shaft rotation axis R. Particularly, the axis y is preferably parallel to the gravity acceleration, i.e. it is oriented vertically. As a consequence, the axis x is oriented horizontally. Advantageously, the axes x and y correspond to the vibration directions of the shaft support 3 relative to the base 2.

Preferably, the fixed IMU 7 is configured to detect at least the three angular speeds along the fixed IMU reference axes x, y, z. Still more preferably, the fixed IMU 7 is configured to detect the accelerations along axes x and z, i.e. along horizontal directions.

The second IMU 8 (hereinafter "rotating IMU 8") is fixedly positioned on the shaft 4, so to rotate integrally with the latter, at a radial distance from the shaft rotation axis R. Preferably, it is oriented such that an axis z of the second IMU reference frame is parallel to the shaft rotation axis R, and the other axes x and y lie on a plane perpendicular to the shaft rotation axis R.

Preferably the rotating IMU 8 is configured to detect at least the angular speed along the rotating IMU reference axes x, y, i.e. the axes lying in the plane perpendicular to the shaft rotation axis R.

Since the rotating IMU 8 introduces an unbalance in the system, advantageously the balancer 1 comprises a balancing mass 9 having the same mass as the rotating IMU 8, and fixedly positioned on the shaft 4, so to rotate integrally with the latter, in a position radially opposite to the radial position of the rotating IMU 8 with reference to the rotation axis R.

The fixed 7 and the rotating 8 IMUs, advantageously, comprise respective batteries. In this manner, once these batteries are at least partially charged, the balancer 1 according to the invention does not need any energy source (apart from the human energy) for working.

On the basis of the signals coming from the fixed 7 and the rotating 8 IMUs it is possible to determine the severity (i.e. the mass) and the angular position of unbalances, both static (both on the inner and the outer sides) and dynamic.

Particularly, the Applicant has observed that, assuming that the shaft rotation speed ω is constant, each signal y coming from the IMUs 7 and 8 shows harmonic components at $k\omega$, $k=1,2,....$ Therefore, under these conditions, each signal can be represented as:

$$y\,(t) = A \cdot \sin(k\omega t + \boldsymbol{\phi})$$

Wherein:

- A is the signal amplitude;
- $\phi$ is the signal phase;
- t is the time.

Surprisingly, the Applicant has observed that the unbalance severity is related to the signals amplitudes *A*, whereas the unbalance angular position is related to the signals phases $\phi$. This is true both for the static and dynamic unbalances. Therefore, multiple tests have been performed for determining relations between signals coming from the IMUs 7, 8 and the severity and the angular position of unbalances.

Regarding static unbalances, tests have been performed, at the same constant shaft rotational speed co, by introducing on a balanced wheel unbalances by means of known weights, each positioned in subsequent multiple known angular positions (referred to a conventional zero of the wheel). This procedure has been followed for both the inner and the outer planes of the wheel.

Concerning the dynamic unbalance, two masses have been attached on different wheel planes and in opposite positions, i.e., forming an angle of 180° from each other. Each couple has been positioned in subsequent multiple known angular positions (referred to a conventional zero of the wheel). Then, the same tests have been repeated for masses couples of increasing weights. Again, in all the tests the same constant shaft rotational speed ω has been maintained.

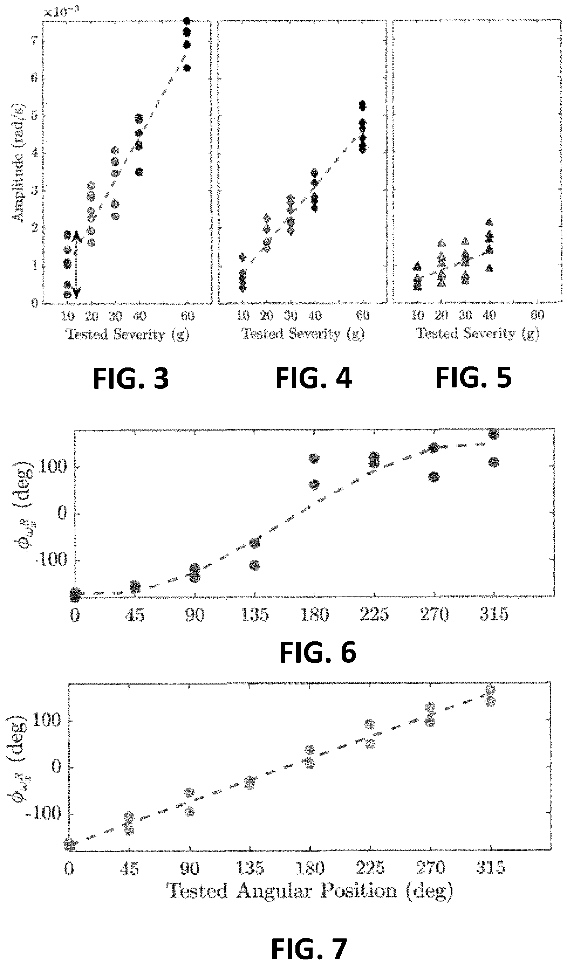

From the above tests it was observed that, if the shaft rotation axis is maintained at a constant rotational speed ω, the relation between the amplitudes of the signals coming from the fixed IMU 7 and the unbalance severity is substantially linear, both in the static and in the dynamic cases. For example, Figure 3 shows the amplitude of the rotational speed along axis x (as defined above) of the fixed IMU 7 for the static unbalance in the wheel outer plane. Particularly, the signal amplitude as a function of the tested severity (i.e. as a function of the unbalancing masses applied), for the same constant shaft rotational speed co, is shown. As can be seen, the amplitude shows a substantially linear trend. The dispersion for each severity is due to the angular position variation of the unbalancing mass. Figure 4 shows the amplitude of the rotational speed along axis x of the fixed IMU 7 for the static unbalance in the wheel inner plane. As can be seen, again, the trend is substantially linear, with the same dispersion phenomenon. Then, Figure 5 shows the amplitude of the rotational speed along axis x of the fixed IMU 7 for the dynamic unbalance case for several couples of opposed masses. Once again, the amplitude shows a substantially linear trend with a dispersion phenomenon caused by the angular position variation.

On the other hand, tests have shown that, for the same constant shaft rotational speed ω, the relation between the signal phases of the signals coming from the rotating IMU 8 and the unbalance angular position is non-linear and, in addition, varies as a function of the mass severity. For example, Figure 6 shows the phase of the rotational speed along axis x of the rotating IMU 8 for a specific static unbalanced mass positioned in the wheel outer plane, for a constant shaft rotational speed ω. Particularly, the diagram shows the signal phase as a function of the tested unbalance angular position. Figure 7 shows the result of the same test for a bigger unbalancing mass.

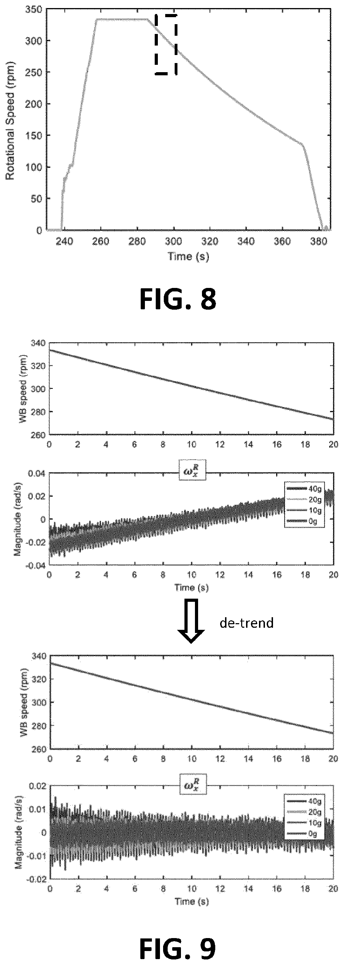

As already mentioned, the above tests results are obtained by considering a constant rotational speed of the shaft. These conditions can be obtained by simulation, or, alternatively, by applying (for the tests purpose only) a motor to the shaft. As it is clear to the skilled person, maintaining a constant rotational speed by manually rotating the shaft, for example through the handle 11, is almost impossible and, in any case, practically not feasible under real conditions. Therefore, the Applicant has considered the situation where, from the stop condition, the shaft 4 is manually rotated up to a predetermined rotational speed (which can be detected for example by the rotating IMU 8) and then the force applied by the operator is released, such that the shaft rotational speed gradually decreases. Such situation is depicted for example in the Figure 8, showing an acceleration followed by a deceleration of the rotational speed. It is to be noted that, in the diagram of Figure 8, the portion where the rotational speed is constant is fictional and due to the fact that the saturation of the sensor, i.e. the maximum detectable speed, was reached.

Surprisingly, the Applicant has observed that, if tests similar to those described above for a constant rotational speed condition are repeated during a limited and predetermined time window, for example 2 seconds (see the square in dotted line of Figure 8, which is enlarged just for the sake of clarity), during the deceleration phase of the shaft 4, preferably immediately or shortly after the deceleration has begun, i.e. immediately or shortly after a predetermined shaft rotational speed has been reached, similar results can be obtained.

Particularly, with reference to the static unbalances, the Applicant has observed that, for the fixed IMU 7, the vibrations amplitude still decreases with the unbalance severity and, additionally, decreases with the shaft rotational speed. However, in the above-mentioned predetermined time window, since the rotational speed is almost constant, the process is quasi-stationary. Therefore, a sinusoidal model similar to that used for the constant rotation speed case substantially still applies. Particularly, each signal y coming from the fixed IMU 7 can be represented as:

$$y\,(t) = A \cdot \sin(\omega t + \phi)$$

Wherein:

- A is the signal amplitude ;
- φ is the signal phase;
- t is the time
- ω is the average rotational speed during the predetermined time window in the shaft deceleration phase.

With reference again to the static unbalances, the Applicant has additionally observed that, for the rotating IMU 8, the signal amplitudes significantly decrease while the shaft rotational speed decreases. As a consequence, a preliminary signal de-trend is advantageous, i.e. it is advantageous to modify the detected signal such that the signal mean value as a function of time (i.e. as a function of the decreasing shaft rotational speed) is substantially equal to zero. Figure 9 shows what described, i.e. the same signal coming from the rotating IMU before and after the de-trend operation, as a function of the decreasing shaft rotational speed. Then, under the quasi-stationary assumption, a sinusoidal model can be used again. Particularly, each signal y coming from the rotating IMU 8 can be represented as:

$$y\,(t) = A_1 \cdot \sin(2\omega t + \phi_1) + A_2 \cdot \sin(\omega t + \phi_2)$$

Wherein:

- $A_1$ and $A_2$ are the signal amplitudes;
- $\phi_1$ and $\phi_2$ are the signal phases;
- t is the time
- ω is the average rotational speed during the predetermined time window in the shaft deceleration phase.

The Applicant has finally observed that the above conclusions and models, both for the fixed IMU 7 and for the rotating IMU 8, can be equally applied to the dynamic unbalances.

It is to be noted that, in general, the amplitudes of the signals coming from the rotating IMU 8 are much lower than the amplitudes of the signals coming from the fixed IMU 7. Therefore, it is preferable that at least the rotating IMU 8 has a high sensitivity, particularly higher than the sensitivity of the fixed IMU 7. Additionally, for the same reasons, the balancer overall frictions should be reduced as much as possible. For example, the shaft 4 can be connected to the shaft support 3 through low-friction bearings (not shown in the Figures).

In view of the above results, predetermined maps can be constructed:

- (Substantially linear) maps linking the amplitudes of the signals coming from the fixed IMU 7 to the unbalance severity. These maps are constructed for the static cases (both inner sides and outer sides) and for the dynamic case. The (discrete) tested results can be modelled for example with a relation f of the type:

$$\widehat{m} = f(A_{a_x}^F, A_{a_z}^F, A_{\omega_x}^F, A_{\omega_y}^F, A_{\omega_z}^F)$$

wherein:

  ○ $\hat{m}$ is the estimated severity;
  ○ $A_{a_x}^F$ is the amplitude of the acceleration signal along the axis x of the fixed IMU 7;
  ○ $A_{a_z}^F$ is the amplitude of the acceleration signal along the axis z of the fixed IMU 7;
  ○ $A_{\omega_x}^F$ is the amplitude of the angular speed signal along the axis x of the fixed IMU 7;
  ○ $A_{\omega_y}^F$ is the amplitude of the angular speed signal along the axis y of the fixed IMU 7;
  ○ $A_{\omega_z}^F$ is the amplitude of the angular speed signal along the axis z of the fixed IMU 7.

This continuous relation can be obtained for example using a least square model.

- (Non-linear) maps linking the phases of the signals coming from the rotating IMU 8 and the unbalance severity, determined as described above, to the unbalance angular position. The discrete tested results can be modelled for example with a relation f of the type:

$$\hat{\phi} = f(\widehat{m}, \phi_{\omega_x}^R, \phi_{\omega_y}^R)$$

wherein:

  ○ $\hat{\phi}$ is the estimated unbalance angular position;
  ○ $\hat{m}$ is the estimated unbalance severity;
  ○ $\phi_{\omega_x}^R$ are the phases of the angular speed signal along the axis x of the rotating IMU 8;
  ○ $\phi_{\omega_y}^R$ are the phases of the angular speed signal along the axis y of the rotating IMU 8.

This (continuous) relation can be obtained for example using a neural network.

These maps can be constructed for the static cases (both inner and outer sides) and for the dynamic case.

Once these maps are determined (this can be done for each specific balancer according to the invention), it is possible to estimate the desired parameters (unbalance severity and unbalance position) on the basis of the signals coming from the fixed and rotating IMUs and of the maps.

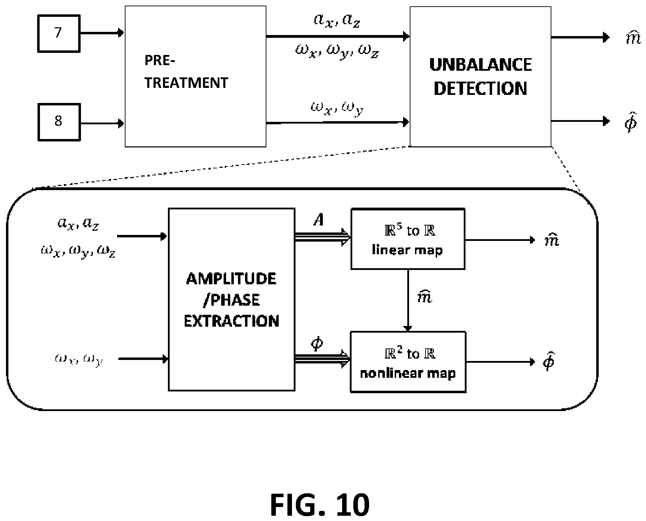

Figure 10 shows what described above. Given the fixed and the rotating IMUs signals, they are pre-processed as described above, then the respective amplitudes A and phases $\phi$, according to the above description, are extracted. Signal amplitudes are used for estimating the unbalance severity $\hat{m}$. Then, given the estimated unbalance severity $\hat{m}$, signal phases $\phi$ are used for estimating the unbalance angular position $\hat{\phi}$.

To this purpose, advantageously, the balancer 1 comprises a control unit configured for:

- receiving the signals coming from the fixed 7 and the rotating 8 IMUs;
- determining when the shaft 4 has reached a predetermined rotational speed on the basis of at least one of the signals coming from said first 7 and second 8 IMUs;

- determining if the shaft 4 is decelerating after reaching said predetermined rotational speed on the basis of at least one of the signals coming from said first 7 and second 8 IMUs;

- if the shaft 4 is decelerating, determining during a predetermined time widow from said signals coming from the first 7 and the second 8 IMUs an estimated unbalance severity $\hat{m}$ and an estimated unbalance angular position $\hat{\phi}$ in the rotor 5.

The control unit can be a part of the balancer or can be included in one of the IMUs 7, 8 or both of them. Preferably it can be fed by a battery, such that no electric source is needed for the balancer to work once the batteries are charged.

It is to be noted that the maps can be memorized in a memory module (not shown in the Figures) comprised in the control unit of the balancer 1.

It is further to be noted that the above-mentioned first and second predetermined relations are obtained for the static unbalance on the wheel inner side, for the static unbalance on the wheel outer side and for the dynamic unbalance.

As mentioned above, the balancing takes place in a predetermined time window during the deceleration phase after the shaft 4 and consequently the rotor 5 to be balanced have reached a predetermined rotational speed. Therefore, after the end of the predetermined time window, the rotation of the shaft 4 is no longer necessary for the balancing.

According to a possible embodiment, the manual balancer 1 comprises a visual and/or acoustic indicator (not shown in the Figures) configured for indicating to the operator when the predetermined shaft rotational speed has been reached. For example, the control unit is connected to the rotating IMU 8 and to the indicator and is configured for activating the indicator when it determines that the predetermined shaft rotation speed has been reached on the basis of the signal(s) coming from the rotating IMU 8. Once the indicator is activated, the operator can release the means 10 for rotating the shaft 4, which consequently starts decelerating.

According to a possible embodiment, the manual balancer 1 comprises a visual and/or acoustic indicator (not shown in the Figures) configured for indicating to the operator when the predetermined time window during the deceleration phase is finished. This second indicator can be additional to the above-mentioned first indicator or, alternatively can be the same indicator. In this latter case, for example, the same indicator can provide a different kind of indication for the reaching of the predetermined shaft rotational speed and for the subsequent ending of the predetermined time window. The balancer control unit can be connected to this indicator and be configured to activate it once the predetermined time window is ended. In this manner, the operator can activate the brake 13 for stopping the rotation of the shaft 4. Alternatively or in addition, the balancer control unit can be connected to the brake 13 so to activate it when the predetermined time window is ended.

In principle, when a user operates the balancer according to the invention, it is not known whether the wheel to be balanced is affected by a static unbalance (on the inner side, on the outer sided, or both) and/or by a dynamic unbalance.

Therefore, according to a possible embodiment, the wheel balancing can be carried out by using a trial and error approach. In other words, the user can test each condition (for example by selecting the supposed unbalance condition on the machine, which, as a consequence, considers only the relevant maps), obtaining estimated unbalance severity and angular position, apply the balancing masses and then possibly repeat the tests for the same supposed unbalance and/or for other types of unbalances. This approach can be followed until a low or no unbalance of any type is detected at all.

According to another embodiment, the control unit is configured to distinguish the most likely unbalance condition on the basis of the predominant signals coming from the fixed and rotating IMUs and then consider only the maps corresponding to the determined condition. In this case, the control unit is advantageously configured for outputting the determined unbalance condition (i.e. static unbalance on the inner side, static unbalance on the outer side, or dynamic unbalance), the unbalance severity and the unbalance angular position for the determined condition.

To the above-mentioned embodiments of the manual rotor balancer and of the method for manually balancing a rotor according to the invention, the skilled person, in order to meet specific current needs, can make several additions, modifications, or substitutions of elements with other operatively equivalent elements, without however departing from the scope of the appended claims.

Additionally, the invention can include further characteristics and limitations, which can be described or defined by the following characteristics which numerals refer to the claims numbers:

A balancer 1 according to claim 1, wherein in the balancer 1 normal condition of use, the shaft rotation axis R is horizontal.

A balancer 1 according to claim 1 or 2, wherein the first IMU 7 is oriented such that a first axis z of the first IMU reference frame is parallel to the shaft rotation axis R and the other two axes x, y lie on a plane perpendicular to the shaft rotation axis R.

A balancer 1 according to any of the claims, wherein the first IMU 7 is configured to detect the first $\omega_z$, the second $\omega_y$ and the third $\omega_x$ angular speeds along said three axes x, y, z of the first IMU reference frame.

A balancer 1 according to any of the claims, wherein the first IMU 7 is configured to further detect the first $a_z$ and the

third $a_x$ accelerations along said first z and third x axes of the first IMU reference frame.

A balancer 1 according to any of the claims, wherein the first IMU 7 is oriented such that a second y of said other two axes x, y is oriented vertically and a third x of said other two axes x, y is oriented horizontally.

A balancer 1 according to any of the preceding claims, wherein the second IMU 8 is configured to detect the second $\omega_y$ and the third $\omega_x$ angular speeds along said second y and third x axes of the second IMU reference frame.

A balancer 1 according to any of the preceding claims, wherein said means 10 for manually rotating the shaft 4 comprises a handle 11 directly or indirectly connected to the shaft 4.

A balancer 1 according to the preceding claim, wherein said handle 11 is connected with the shaft 4 through a transmission 12, the transmission 12 comprising a freewheel mechanism.

A balancer 1 according to any of the claims, wherein the unbalance comprises at least one of: a static unbalance on the rotor inner side, a static unbalance on the rotor outer side, a dynamic balance, wherein said first and second predetermined relations depend on the unbalance type, wherein the control unit is configured for distinguishing the type of the unbalance among a static unbalance on the rotor inner side, a static unbalance on the rotor outer side, a dynamic balance on the basis of the signals received from the first IMU 7 and the second IMU 8, and for providing a flag indicating the type of unbalance.

A balancer 1 according to any of the claims, further comprising a visual and/or acoustic indicator for indicating when the predetermined shaft rotational speed has been reached, the control unit being connected to the first IMU 7 and/or to the second IMU 8 and to the indicator and being configured for activating the indicator when it determines that the predetermined shaft rotational speed has been reached on the basis of at least one signal coming from the first IMU 7 and/or from the second IMU 8.

A balancer 1 according to any of the claims, further comprising a visual and/or acoustic indicator for indicating when the predetermined time window is finished, the control unit being connected to the indicator and being configured for activating the indicator when it determines that the predetermined time window is finished.

A balancer 1 according to any of the claims, wherein the control unit is connected to the brake and is configured for activating said brake when it determines that the predetermined time window is finished.

A method according to any of method claims, further comprising:

- pre-processing the signals coming from the second IMU 8 during the predetermined time window for eliminating the trends of the amplitudes due to the shaft deceleration;
- estimating the amplitudes and the phases of the pre-processed signals coming from the second IMU 8 assuming that during said predetermined time window the shaft rotational speed is equal to the average rotational speed during the predetermined time window.

A Method according to any of the claims, wherein determining the unbalance angular position ($\hat{\phi}$) comprises: determining the unbalance angular position on the basis of a second predetermined relation between the phases estimated for the signals received from the second IMU 8, the estimated unbalance severity ($\hat{m}$) and the unbalance angular position.

## Claims

1. A manual balancer (1) for balancing a rotor (5), particularly a vehicle wheel, comprising:

   - a base (2);
   - a shaft support (3) connected to the base (2);
   - a shaft (4) rotatable along a rotation axis (R) relative to the shaft support (3), configured such that the rotor (5) to be balanced can be mounted on the shaft (4);
   - means (11) for manually rotating the shaft (4);
   - one or more elastic elements (6) positioned between the shaft support (3) and the base (2), such that the shaft support (3) is elastically suspended over the base (2);
   - a first IMU (7) fixedly positioned on the shaft support (3) and configured to measure a first ($a_z$) and/or a second ($a_y$) and/or a third accelerations ($a_x$), and/or a first ($\omega_z$) and/or a second ($\omega_y$) and/or a third ($\omega_x$) angular speeds along three axes (x, y, z) of a reference frame integrally moving with the first IMU (7), and to generate signals representative of the same;
   - a second IMU (8) fixedly positioned on the shaft (4) at a radial distance from the shaft rotation axis (R), and configured to measure a first ($a_z$) and/or a second ($a_y$) and/or a third accelerations ($a_x$), and/or a first ($\omega_z$) and/or a second ($\omega_y$) and/or a third ($\omega_x$) angular speeds along three axes (x, y, z) of a reference frame integrally moving with the second IMU (8), and to generate signals representative of the same.

2.  Balancer (1) according to claim 1, wherein the second IMU (8) is oriented such that a first axis (z) of the second IMU reference frame is parallel to the shaft rotation axis (R), and a second (y) and a third (x) axes of said second IMU reference frame lie on a plane perpendicular to the shaft rotation axis (R).

3.  Balancer (1) according to claim 1 or 2, wherein the one or more elastic elements (6) are configured such that the shaft support (3) can oscillate vertically and horizontally relative to the base (2).

4.  Balancer (1) according to claim 3, wherein the one or more elastic elements (6) have two different stiffness coefficients along the vertical and the horizontal displacement directions of the shaft support (3) relative to the base (2).

5.  Balancer (1) according to any of the preceding claims, wherein the one or more elastic elements (6) comprise one or more elastomer mounts placed between the shaft support (3) and the base (2).

6.  Balancer (1) according to any of the preceding claims, further comprising a balancing mass (9) having the same mass as the second IMU (8), said balancing mass (9) being fixedly positioned on the shaft (4) in a position radially opposite to the radial position of the second IMU (8).

7.  Balancer (1) according to any of the preceding claims, further comprising a brake (13) for braking the shaft (4).

8.  Balancer (1) according to any of the preceding claims, further comprising a control unit configured for:

    - receiving the signals coming from the first IMU (7) and the second IMU (8);
    - determining when the shaft (4) has reached a predetermined minimal rotational speed on the basis of at least one of the signals coming from said first IMU (7) and second IMU (8);
    - determining if the shaft (4) is decelerating after reaching said predetermined rotational speed on the basis of at least one of the signals coming from said first IMU (7) and second IMU (8);
    - if the shaft (4) is decelerating, determining during a predetermined time window from said signals coming from the first IMU (7) and the second IMU (8) an estimated unbalance severity ($\hat{m}$) and an estimated unbalance angular position ($\hat{\phi}$) in the rotor (5).

9.  Balancer (1) according to claim 8, wherein the control unit is configured for estimating the amplitudes and the phases of the signals coming from the first IMU (7) during the predetermined time window assuming that during said predetermined time window the shaft rotational speed is equal to the average rotational speed during the predetermined time window.

10. Balancer (1) according to claim 8 or 9, wherein the control unit is configured for estimating the amplitudes and the phases of the signals coming from the second IMU (8) during the predetermined time window, after a pre-processing of the signals for eliminating the trends due to the shaft deceleration, assuming that during said predetermined time window the shaft rotational speed is equal to the average rotational speed during the predetermined time window.

11. Balancer (1) according to the claims 8 or 9, wherein the control unit is configured for determining the estimated unbalance severity ($\hat{m}$) on the basis of a first predetermined relation between the amplitudes of the signals estimated for the first IMU (7) and the unbalance severity, and for determining the unbalance angular position ($\hat{\phi}$) on the basis of a second predetermined relation between the phases of the signals estimated for the second IMU (8), the estimated unbalance severity ($\hat{m}$) and the unbalance angular position.

12. A method for manually balancing a rotor (5), particularly a vehicle wheel, comprising:

    - mounting said rotor on a shaft (4) of a balancer (1) comprising a base (2), a shaft support (3) connected to the base (2), said shaft (4) rotatable along a rotation axis (R) relative to the shaft support (3), one or more elastic elements (6) positioned between the shaft support (3) and the base (2), such that the shaft support (3) is elastically suspended over the base (2), a first IMU (7) fixedly positioned on the shaft support (3) and configured to measure a first ($a_z$) and/or a second ($a_y$) and/or a third accelerations ($a_x$), and/or a first ($\omega_z$) and/or a second ($\omega_y$) and/or a third ($\omega_x$) angular speeds along three axes (x, y, z) of a reference frame integrally moving with the first IMU (7), and to generate signals representative of the same, a second IMU (8) fixedly positioned on the shaft (4) at a radial distance from the shaft rotation axis (R), and configured to measure a first ($a_z$) and/or a second ($a_y$) and/or a third accelerations ($a_x$), and/or a first ($\omega_z$) and/or a second ($\omega_y$) and/or a third ($\omega_x$) angular speeds along three axes (x, y, z) of a reference frame integrally moving with the second IMU (8), and to generate signals representative of the same;
- manually rotating the shaft (2) until it has reached a predetermined minimal rotational speed;
- releasing the shaft (2) such that it gradually decelerates;
- during a predetermined time widow when the shaft decelerates, receiving the signals coming from the first IMU (7) and the second IMU (8);
- determining from said signals coming from the first IMU (7) and the second IMU (8) an estimated unbalance severity ($\hat{m}$) and an estimated unbalance angular position ($\hat{\phi}$) in the rotor (5).

13. Method according to claim 12, further comprising: estimating the amplitudes and the phases of the signals coming from the first IMU (7) during the predetermined time window assuming that during said predetermined time window the shaft rotational speed is equal to the average rotational speed during the predetermined time window.

14. Method according to claim 13, wherein determining the estimated unbalance severity ($\hat{m}$) comprises: determining the estimated unbalance severity ($\hat{m}$) on the basis of a first predetermined relation between said amplitudes estimated for the signals received from the first IMU (7) and the unbalance severity.

15. A Control unit, configured as part of a balancer (1) according to any of claims 8 to 11 or to perform at least one step of a method according to any of claims 12 to 14.

FIG. 1 (PRIOR ART)

FIG. 2

**FIG. 3**   **FIG. 4**   **FIG. 5**

**FIG. 6**

**FIG. 7**

**FIG. 8**

**FIG. 9**

## FIG. 10

Europäisches
Patentamt

European
Patent Office

Office européen
des brevets

# EUROPEAN SEARCH REPORT

**Application Number**

EP 20 18 7508

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2015/167780 A1 (MATTEUCCI MARCO [IT] ET AL) 18 June 2015 (2015-06-18)<br>* abstract *<br>* paragraphs [0011], [0034] - [0050] *<br>* figure 2 *<br>----- | 1-15 | INV.<br>G01M1/04<br>G01M1/22<br>G01M17/013 |
| Y | CN 107 132 048 A (XI'AN JIAOTONG UNIV) 5 September 2017 (2017-09-05)<br>* abstract; figure 1 *<br>* paragraph [0016] *<br>* figure 1 *<br>----- | 1-15 | |
| A | CN 105 699 099 A (UNIV CHONGQING) 22 June 2016 (2016-06-22)<br>* figure 1 *<br>----- | 1-15 | |

**TECHNICAL FIELDS SEARCHED (IPC)**

G01M

The present search report has been drawn up for all claims

| Place of search | Date of completion of the search | Examiner |
|---|---|---|
| The Hague | 18 January 2021 | Daman, Marcel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 18 7508

This annex lists the patent family members relating to the patent documents cited in the above-mentioned European search report.
The members are as contained in the European Patent Office EDP file on
The European Patent Office is in no way liable for these particulars which are merely given for the purpose of information.

18-01-2021

| Patent document cited in search report | | Publication date | Patent family member(s) | | Publication date |
|---|---|---|---|---|---|
| US 2015167780 | A1 | 18-06-2015 | CN | 104662401 A | 27-05-2015 |
| | | | EP | 2880412 A1 | 10-06-2015 |
| | | | RU | 2015102530 A | 20-09-2016 |
| | | | US | 2015167780 A1 | 18-06-2015 |
| | | | WO | 2014020396 A1 | 06-02-2014 |
| CN 107132048 | A | 05-09-2017 | NONE | | |
| CN 105699099 | A | 22-06-2016 | NONE | | |

For more details about this annex : see Official Journal of the European Patent Office, No. 12/82